# FASCICULE DE BREVET EUROPEEN

(11) **EP 0 704 676 B1**
(45) Date de publication et mention de la délivrance du brevet: **04.11.1998**
(21) Numéro de dépôt: 95401753.9
(22) Date de dépôt: 24.07.1995
(51) Int. Cl.: G01C 21/20, G06F 3/033

(54) **Système de visualisation d'informations sur un afficheur, notamment embarqué à bord d'un véhicule automobile**
System zur Anzeige von Informationen in einem Auto
System for displaying information in an automobile

(30) Priorité: 28.09.1994 FR 9411604
(43) Date de publication de la demande: 03.04.1996
(73) Titulaire: AUTOMOBILES PEUGEOT, 75116 Paris (FR); AUTOMOBILES CITROEN, 92200 Neuilly-sur-Seine (FR)
(72) Inventeur: Rostan, Hervé, F-78500 Sartrouville (FR); Fromion, Alexandre, F-92160 Antony (FR)
(74) Mandataire: Habasque, Etienne Joel Jean-François

(56) Documents cités:
- IBM TECHNICAL DISCLOSURE BULLETIN, vol. 34, no. 11, NEW YORK US, pages 68-69, XP 000303187 'OS/2:CONTEXTUAL ANIMATED - OPEN WINDOW CONTROL'
- IBM TECHNICAL DISCLOSURE BULLETIN, vol. 37, no. 02b, Février 1994 NEW YORK US, page 239 XP 000433827 'Magnification control'

## Description

La présente invention concerne un système de visualisation d'informations sur un afficheur notamment embarqué à bord d'un véhicule automobile.

On connaît déjà dans l'état de la technique, des systèmes de visualisation de ce type, dans lesquels l'afficheur est relié à une unité centrale de pilotage de l'afficheur associée à des moyens de commande de l'affichage d'informations sur celui-ci par un utilisateur.

L'intégration de plus en plus poussée des systèmes informatiques à bord des véhicules automobiles est liée aux développements récents de différentes applications d'aide à la conduite des véhicules, comme par exemple des systèmes de cartographie, de calcul d'itinéraires, de visualisation topographique, etc...

Cependant, ces systèmes présentent un certain nombre d'inconvénients car au niveau embarqué, l'afficheur disponible est souvent de faible encombrement pour des raisons de place à bord du véhicule.

Cette taille ne permet pas de disposer d'une surface visuelle d'affichage suffisante pour afficher simultanément des graphismes et des commentaires.

On notera également qu'il est particulièrement important que les informations présentées sur l'afficheur soient bien lisibles et qu'elles n'imposent pas au conducteur du véhicule de détailler ou de déchiffrer l'afficheur.

Les informations affichées doivent donc être réduites au strict minimun utile à la compréhension de l'utilisateur.

Ceci implique qu'il faut rechercher au niveau de la configuration logicielle la meilleure ergonomie possible.

Le meilleur moyen d'atteindre ce but, consiste à utiliser le plus souvent possible des symboles tels que des icônes, des pictogrammes ou des animations graphiques dont l'interprétation ne nécessite pas d'explication particulière.

Ceci fait appel aux capacités intuitives de l'utilisateur.

Autrement dit toute animation ou icône graphique qui symbolise clairement une fonction ou qui permet une analogie avec quelque chose de connu de l'utilisateur, est directement exploitable car il permet de se passer d'un apprentissage préalable.

Ces problèmes présents dans tous les domaines, comme par exemple dans le domaine de la signalisation routière qui doit être comprise par exemple par des personnes de cultures différentes, sont encore plus délicats à résoudre dans le cas de systèmes complexes et utilisables par une large diversité d'utilisateurs.

La présence d'un afficheur dans un véhicule automobile amène des besoins nouveaux auxquels il faut faire face en utilisant des solutions différentes de celles qui pourraient être proposées dans des situations classiques telles que celles de l'utilisation d'un ordinateur de bureau.

L'impossibilité d'exprimer clairement les actions de l'utilisateur sur un afficheur de petite taille pose des problèmes de manipulation et se manifeste à toutes les étapes de l'utilisation du ou des logiciels associés à ces systèmes.

Aussi toute astuce permettant de contourner cette difficulté mérite d'être examinée.

Ceci est par exemple le cas lors de l'affichage d'informations d'aide à la navigation d'un véhicule. Ces informations sont affichées à une échelle déterminée sur l'afficheur, ce qui pose des problèmes de lecture par l'utilisateur.

En effet, quelle que soit la qualité de l'afficheur sur lequel sont affichées les informations cartographiques, il est souvent nécessaire de pouvoir modifier l'échelle de représentation pour obtenir des vues plus détaillées ou plus globales.

Il faut donc être capable de matérialiser sur l'afficheur, la zone que l'on veut agrandir et également de faire comprendre l'opération inverse de retour à une échelle inférieure.

C'est ainsi que les fonctions d'agrandissement ou de réduction graphique couramment employées dans les applications de navigation ou d'informations de trafic dans les systèmes d'aide à la navigation des véhicules posent des problèmes ergonomiques.

En effet, il faut être capable, pour de telles applications de positionner un pointeur de zone à n'importe quel endroit de la carte présentée sur l'afficheur pour ensuite activer l'opération d'agrandissement.

S'il est aisé de positionner le pointeur de zone représenté par exemple par un carré en surimpression sur l'afficheur, à l'aide d'un curseur, d'un désignateur quelconque, ou de tout autre moyen tel que par exemple un écran tactile ou encore un système de reconnaissance vocale, il est relativement difficile de faire percevoir l'effet qu'aura la validation de la fonction d'agrandissement sur l'afficheur sans ajouter d'informations supplémentaires sur l'afficheur.

La perception de la fonction de retour à une échelle inférieure est encore plus compliquée.

Le but de l'invention est donc de résoudre ces problèmes.

A cet effet, l'invention a pour objet un système de visualisation d'informations sur un afficheur, notamment embarqué à bord d'un véhicule automobile, dans lequel l'afficheur est relié à une unité centrale de pilotage de l'afficheur associé à des moyens de commande de l'affichage d'informations sur celui-ci, comportant des moyens de commande de l'affichage sur l'afficheur, de repères matérialisant une zone de l'afficheur à afficher à une échelle agrandie, des moyens de déplacement desdits repères pour sélectionner la zone de l'afficheur à afficher à échelle agrandie, et des moyens de commande de l'échelle d'affichage de ladite zone sélectionnée, caractérisé en ce que l'unité centrale de pilotage est adaptée pour commander l'affichage sur l'afficheur, d'informations d'échelle animées se réduisant ou grandissant cycliquement, pour indiquer à l'utilisateur les possibilités d'agrandissement ou de réduction d'échelle.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système de visualisation selon l'invention;
- la Fig.2 illustre le fonctionnement de moyens de déplacement de repères de sélection d'une zone entrant dans la constitution d'un système de visualisation selon l'invention;
- les Figs.3,4, 5 et 6 illustrent l'affichage d'informations animées se réduisant; et
- les Figs. 7,8,9,10 et 11 illustrent l'affichage d'informations animées grandissant.

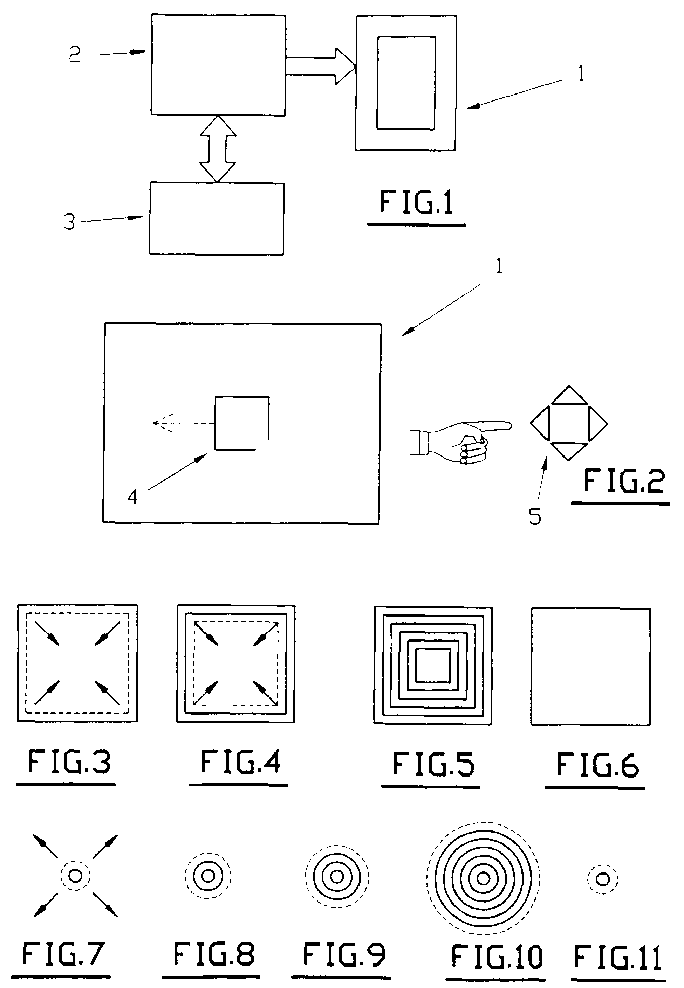

On reconnaît sur la figure 1, la structure générale d'un système de visualisation d'informations sur un afficheur notamment embarqué à bord d'un véhicule automobile.

Sur cette figure, l'afficheur qui peut être constitué par tout afficheur approprié, est désigné par la référence générale 1.

Cet afficheur est relié à une unité centrale de pilotage 2 comportant tout système à microprocesseur approprié et adaptée pour piloter le fonctionnement de l'afficheur.

Cette unité centrale de pilotage est associée à des moyens de commande de l'affichage d'informations désignés par la référence générale 3 sur cette figure 1, ces moyens permettant à un utilisateur de piloter l'affichage des informations sur l'afficheur 1.

Ce système présente différentes capacités, notamment d'agrandissement et de réduction de l'échelle d'affichage par exemple d'une zone déterminée de l'afficheur.

C'est ainsi que ces moyens de commande 3 peuvent par exemple comporter de façon classique, des moyens de commande de l'affichage sur l'afficheur, de repères matérialisant une zone de l'afficheur à afficher à une échelle agrandie.

Cette zone est illustrée par exemple par la référence 4 sur la figure 2.

De plus, il est prévu des moyens de déplacement de ces repères pour sélectionner la zone de l'afficheur à afficher à échelle agrandie. Ces moyens peuvent être constitués de différents organes comme expliqué précédemment et sont désignés de façon générale par la référence 5 sur cette figure 2.

Ces moyens comprennent par exemple quatre touches comme cela est illustré sur la figure 2, adaptées pour contrôler le déplacement des repères matérialisant la zone 4 sur l'afficheur 1, sous la commande de l'utilisateur.

Ces repères peuvent par exemple être constitués par un carré en surimpression sur l'afficheur et dont le déplacement vers la gauche ou vers la droite ou vers le haut ou vers le bas est commandé par l'utilisateur par exemple grâce aux touches correspondantes des moyens 5.

Une fonction de glissement peut également être prévue au cas où l'utilisateur souhaiterait sélectionner une zone se situant hors des informations affichées sur l'afficheur.

De façon classique, les moyens de commande 3 comportent également des moyens de commande de l'échelle ou du facteur d'échelle d'affichage de la zone sélectionnée.

Ces moyens de commande peuvent par exemple être constitués par une touche dont les actionnements successifs déterminent l'échelle d'affichage de la zone.

Bien entendu, d'autres modes de réalisation de ces moyens peuvent être envisagés.

On conçoit alors la difficulté d'utilisation d'une solution graphique statique dans laquelle il faut associer une représentation d'une zone sélectionnée, visualisée par exemple sous la forme d'un carré sur l'afficheur, à une information explicite de type commentaire écrit ou graphisme, exprimant la fonction qui sera effectuée après validation de la commande d'agrandissement ou de réduction d'échelle.

On peut mettre à profit les possibilités dynamiques d'un afficheur et utiliser ainsi un effet visuel amenant intuitivement l'utilisateur à percevoir l'action engagée sans avoir recours à des commentaires ou des explications complémentaires.

L'utilisateur pouvant choisir l'emplacement de la zone à agrandir, il est nécessaire d'afficher sur l'afficheur les limites de cette zone, par exemple par des repères tels qu'un cadre comme cela est indiqué précédemment.

La perception de cette limitation de zone par l'utilisateur peut être complétée par l'utilisation d'une information dynamique ou animée sur l'afficheur qui exprime de manière intuitive, l'effet qui se produira en cas de validation de la commande d'agrandissement ou de réduction.

De même que lorsqu'on cherche à détailler une zone, on se focalise sur celle-ci par concentration du regard, il suffit d'animer sur l'afficheur les limites de la zone à l'aide d'effets concentriques répétés pour indiquer à l'utilisateur les possibilités d'agrandissement ou d'augmentation d'échelle.

C'est ainsi par exemple que dans le cas de la fonction d'agrandissement, un effet de convergence ou de décroissance, simple à réaliser au niveau informatique, stimule l'intuition de l'utilisateur qui peut alors deviner l'opération qui lui est proposée.

Cet effet de focalisation peut être développé de façons multiples :
1) en laissant un cadre fixe pour visualiser la taille réelle de la zone qui sera agrandie et en affichant successivement des cadres de plus en plus petit vers son centre;
2) en laissant un cadre fixe pour visualiser la taille réelle de la zone qui sera agrandie et en affichant un cadre unique à l'intérieur du cadre fixe, dont la taille décroît jusqu'à devenir un point au centre du cadre fixe;
3) en utilisant les solutions précédentes mais sans afficher la limite fixe du cadre extérieur, etc...

Ce mouvement de pictogramme animé d'un mouvement concentrique doit être maintenu tant que la possibilité d'agrandissement est offerte. Il suffit alors de répéter cycliquement l'opération en représentant l'affichage d'origine à la suite de l'affichage du cadre plus petit comme cela est illustré sur les figures 3 à 6.

Les flèches illustrées sur les figures 3 et 4 symbolisent le sens de propagation de l'animation du pictogramme par effet concentrique et n'ont pas besoin par exemple d'apparaître sur l'afficheur.

La zone à agrandir pouvant être délimitée par un cadre externe, on peut également envisager d'offrir à l'utilisateur plusieurs possibilités d'échelle d'agrandissement par utilisation des moyens de commande d'échelle, et même la possibilité de dimensionner lui-même la taille de cet agrandissement à réaliser, en modifiant la taille du cadre fixe extérieur.

Cette fonction d'agrandissement s'accompagne de façon générale d'une fonction inverse, c'est à dire de retour d'agrandissement ou de réduction d'échelle. On peut alors rechercher un effet graphique qui a le même impact intuitif que la solution précédente.

La principale différence vient du fait qu'en cas de retour d'agrandissement, il n'est pas possible de délimiter sur l'écran, à l'aide d'un cadre par exemple, la zone qui sera affichée en cas de validation de la fonction de réduction d'échelle, puisque la zone à afficher est supérieure à la surface de l'afficheur et englobe la zone visualisée sur celui-ci.

Les limites sont donc impalpables et ne sont pas affichables à cette étape de la sélection.

La fonction de retour d'agrandissement peut d'ailleurs suivre différentes régles.

Elle peut produire un retour au dernier affichage d'échelle inférieure proposée, à une visualisation à une échelle imposée et un centrage fixe, etc...

On peut retenir l'idée d'associer à la fonction inverse de la fonction d'agrandissement, un effet visuel inverse à celui proposé pour la fonction d'agrandissement.

Il suffit alors de faire apparaître successivement sur l'afficheur, une série de pictogrammes géométriques de diamètres croissants, c'est à dire illustrant un mouvement de croissance ou d'expansion et de répéter cycliquement cette opération à la manière d'une palpitation.

En réalité, l'effet suffit à la compréhension et bien qu'il soit tout à fait possible de symboliser cette fonction à l'aide de cadres, on préférera cependant une figure qui inspire plus la notion d'expansion, à savoir le cercle.

On obtient ainsi un effet d'ondes similaire à celui obtenu lorsqu'on jette un caillou dans l'eau.

De même que pour la fonction d'agrandissement, cet effet peut être développé de différentes façons.

Il peut être inspiré à l'aide d'un affichage successif de cercles imbriqués ou bien à l'aide d'un cercle unique dont la taille croît.

On peut également assister à un envahissement complet de l'afficheur par la ou les ondes ainsi produites ou bien à une expansion des cercles jusqu'à une taille limite, par exemple d'un même ordre de grandeur que le cadre de visualisation de la zone d'agrandissement.

Cet effet est illustré sur les figures 7,8,9,10 et 11.

Sur la figure 7, les flèches symbolisent le sens de propagation de l'animation par effet d'expansion ou de croissance et n'ont pas besoin d'apparaître sur l'afficheur.

Cet effet peut être combiné avec les différentes propositions suivantes :
1) on peut imaginer d'autoriser un déplacement du centre de l'onde à l'aide de tous types de moyens de déplacement, pour indiquer le centre de la prochaine carte affichée;
2) on peut également envisager de proposer plusieurs échelles de visualisation en jouant sur la vitesse d'expansion des figures géométriques (par exemple plus l'expansion est rapide, plus le facteur d'échelle est grand) ou sur la taille maximale de la figure géométrique.

C'est ainsi par exemple que dans les deux cas présentés ci-dessus, la vitesse d'affichage des pictogrammes peut être fonction des possibilités restantes d'agrandissement ou de réduction d'échelle pour donner à l'utilisateur, cette notion intuitive de possibilités restantes.

Des réalisations pratiques ont permis de vérifier l'universalité de ces solutions et la bonne compréhension intuitive des fonctions affichées.

Les solutions proposées satisfont à toutes les configurations graphiques et plus particulièrement aux contraintes des afficheurs embarqués et les effets visuels restent utilisables aussi bien sur des afficheurs noir et blanc que sur des afficheurs couleurs.

## Revendications

1. Système de visualisation d'informations sur un afficheur, notamment embarqué à bord d'un véhicule automobile, dans lequel l'afficheur (1) est relié à une unité centrale (2) de pilotage de l'afficheur associée à des moyens (3) de commande de l'affichage d'informations sur celui-ci, comportant des moyens (3) de commande de l'affichage sur l'afficheur, de repères (4) matérialisant une zone de l'afficheur à afficher à une échelle agrandie, des moyens (5) de déplacement desdits repères pour sélectionner la zone de l'afficheur à afficher à échelle agrandie, et des moyens (3) de commande de l'échelle d'affichage de ladite zone sélectionnée, caractérisé en ce que l'unité centrale de pilotage (2) est adaptée pour commander l'affichage sur l'afficheur, d'informations d'échelle animées se réduisant ou grandissant cycliquement, pour indiquer à l'utilisateur les possibilités d'agrandissement ou de réduction d'échelle.

2. Système selon la revendication 1, caractérisé en ce que les informations d'échelle animées sont formées par une série de pictogrammes s'affichant les uns à la suite des autres, et de tailles décroissantes ou croissantes.

3. Système selon la revendication 2, caractérisé en ce que la vitesse d'affichage des pictogrammes varie en fonction des possibilités d'agrandissement ou de réduction d'échelle restantes.

## Patentansprüche

1. System zur Anzeige von Informationen auf einer insbesondere in einem Automobil angeordneten Anzeigeeinrichtung, wobei die Anzeigeeinrichtung (1) mit einer Zentraleinheit (2) zum Steuern der Anzeigeeinrichtung (1) verbunden ist und die Zentraleinheit (2) mit einer Einrichtung (3) zum Steuern der Anzeige von Informationen auf der Anzeigeeinrichtung verbunden ist, mit einer Einrichtung (3) zum Steuern einer auf der Anzeigeeinrichtung erfolgenden Anzeige von Markierungen (4), die eine in einem vergrößertem Maßstab anzuzeigende Zone der Anzeigeeinrichtung verkörpern, mit einer Einrichtung (5) zum Verschieben der Markierungen, um die vergrößert anzuzeigende Zone der Anzeigeeinrichtung auszuwählen, und mit einer Einrichtung (3) zum Einstellen des Anzeigemaßstabs der ausgewählten Zone, dadurch gekennzeichnet, daß die Zentralsteuereinheit (2) ausgebildet ist, die Anzeige von bewegten Maßstabsinformationen auf der Anzeigeeinrichtung zu steuern, die sich zyklisch verkleinern oder vergrößern, um dem Benutzer die Möglichkeiten der Maßstabsvergrößerung oder Maßstabsverkleinerung anzuzeigen.

2. System nach Anspruch 1, dadurch gekennzeichnet, daß die bewegten Maßstabsinformationen durch eine Reihe von Piktogrammen gebildet sind, die nacheinander angezeigt werden und deren Größe abnimmt oder zunimmt.

3. System nach Anspruch 2, dadurch gekennzeichnet, daß die Geschwindigkeit der Anzeige der Piktogramme sich in Abhängigkeit von den verbleibenden Möglichkeiten der Maßstabsvergrößerung oder Maßstabsverkleinerung ändert.

## Claims

1. A system for displaying information on a display unit, particularly installed in a motor vehicle, in which the display unit (1) is connected to a central unit (2) for controlling the display unit, associated with means (3) for controlling the display of information on this display unit, comprising means (3) for controlling the display on the display unit, markers (4) delimiting a zone of the display unit for display on an enlarged scale, means (5) for displacing these markers to select the zone of the display unit for display on an enlarged scale, and means (3) for controlling the scale of the display of this selected zone, characterised in that the central control unit (2) is adapted to control the display on the display unit, animated scale information being reduced or enlarged cyclically, to indicate to the user the possibilities for enlarging or reducing the scale.

2. A system according to claim 1, characterised in that the animated scale information is formed by a series of pictograms displayed one after the other, and of decreasing or increasing sizes.

3. A system according to claim 2, characterised in that the display speed of the pictograms varies according to the remaining scale enlargement or reduction possibilities.
